Europäisches Patentamt

European Patent Office

Office européen des brevets

(11) Veröffentlichungsnummer: **0 261 532 B1**

(12) **EUROPÄISCHE PATENTSCHRIFT**

(45) Veröffentlichungstag der Patentschrift: 27.02.91

(21) Anmeldenummer: 87113373.2

(22) Anmeldetag: 12.09.87

(51) Int. Cl.⁵: **F16B 7/04, E06B 3/96**

(54) **Eckverbinder für Hohlprofile.**

(30) Priorität: 22.09.86 DE 3632154

(43) Veröffentlichungstag der Anmeldung:
**30.03.88 Patentblatt 88/13**

(45) Bekanntmachung des Hinweises auf die
Patenterteilung:
**27.02.91 Patentblatt 91/09**

(84) Benannte Vertragsstaaten:
**AT BE CH DE FR IT LI LU NL**

(56) Entgegenhaltungen:
**EP-A- 0 126 410        DE-A- 1 904 908
DE-A- 1 943 342        DE-A- 2 600 785
DE-C- 1 284 164        US-A- 3 099 051**

(73) Patentinhaber: **Kraus, Siegfried
Paul-Ehrlich-Strasse 25
D-6074 Rödermark 2(DE)**

(72) Erfinder: **Kraus, Siegfried
Paul-Ehrlich-Strasse 25
D-6074 Rödermark 2(DE)**

(74) Vertreter: **Zapfe, Hans, Dipl.-Ing.
Am Eichwald 7, Postfach 20 01 51
D-6056 Heusenstamm 2 (Rembrücken)(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Eckverbinder nach dem Oberbegriff des Patentanspruchs 1.

Durch das DE-U-1 919 273 und die CH-A-345 256 ist es bekannt, plattenförmige Bauelemente aus Kastenprofilen mit rechteckigem Querschnitt zusammenzusetzen. Zu diesem Zweck besitzen die aus Aluminium oder Kunststoff bestehenden Hohlprofile an ihren Schmalseiten Feder- und Nutprofile, mittels welcher die rechtwinklig zu ihren Längsachsen abgeschnittenen Kastenprofile durch Einschieben der Feder in die Nut miteinander zu größeren Tafeln vereinigt werden können. Es ist nicht angegeben, daß man aus derartigen Kastenprofilen Eckverbinder herstellen kann.

Für die Herstellung von Eckverbindungen zwischen auf Gehrung geschnittenen Hohlprofilen steht heute eine Vielzahl von im Kokillenguß hergestellten "Eckwinkeln" zur Verfügung, sofern es sich um kleinere Profilquerschnitte sowie um 90°-Eckverbindungen handelt, wie sie im Fenster- und Türenbau überwiegend vorkommen. Derartige Eckwinkel erlauben es jedoch nicht, Eckverbindungen mit einem von 90° abweichenden Winkel herzustellen oder gar Stoßverbindungen, d.h. die geradlinige Aneinanderreihung derartiger Hohlprofile. (DE-C-1 284 164; DE-A-1 904 908).

Für die Herstellung von Eckverbindungen mit einem von 90° abweichenden Eckwinkel gibt es außerdem verstellbare Winkel: So ist durch die DE-A-34 12 004 ist ein Eckverbinder nach dem Oberbegriff des Anspruchs 1 bekannt, der dadurch als Gelenk ausgebildet ist, daß eine zylindrische Feder in eine von einer Teilzylinderfläche mit 270° Umfangswinkel umgebene Nut eingesetzt ist. Dabei steht die Gelenkachse senkrecht auf derjenigen Schwenkebene, in der die Längsachsen der Hohlprofile anfänglich verschwenkbar sind. Die Festlegung der Winkelstellung der Eckverbindung erfolgt dabei nur durch die Lage des Gehrungsschnitts der Hohlprofile und durch deren Zusammenschieben bis zum Anschlag in der Gehrungsfuge. Der Eckverbinder selbst ist also nicht in der Lage, die Eckverbindung zu versteifen, d.h. Biegemomente um seine Schwenkachse aufzunehmen und kann nur auf Zug beansprucht werden, wobei die aufgeschobenen Hohlprofile die einen Umfangswinkel von 135° beschreibende hohlzylindrische Wand der Nut auch nicht auf ihrem gesamten Umfang gegen ein Aufbiegen bzw. Auffedern schützen, so daß die Verbindungsstelle einen Schwachpunkt der Rahmenkonstruktion bildet.

Durch die DE-A-1 943 342 ist es bekannt, Geländerteile aus Hohlprofilen durch Gelenkwinkel miteinander zu verspannen, die jedoch selbst keine Feststellmöglichkeit besitzen, also ohne die Hohlprofile keine Biegemomente übertragen können.

Ähnmlich ist dies bei einer anderen bekannten Ausführungsform, bei der an den beiden Schenkeln kreisscheibenförmige Platten angeformt sind, die in Bezug auf beide Schenkel abwechselnd ineinandergreifen und durch Schrauben gegeneinander verspannbar sind. Abgesehen davon, daß die statische Festigkeit auch derartiger "Gelenkwinkel" verhältnismäßig gering ist, verursacht auch die Ausrichtung der an der Gehrungsfuge spiegelsymmetrisch zusammenstoßenden, identischen Hohlprofile Schwierigkeiten, weil nämlich wegen der im wesentlichen zylindrischen Außenform der Gelenkstelle ausgerechnet im Bereich der Gehrungsfuge jegliche Führung oder Abstützung für die Hohlprofile fehlt. Außerdem füllen die beiden Schenkel die rechteckigen Hohlräume, in die sie eingesteckt werden, nicht vollständig aus, so daß eine umständliche Befestigung durch Schrauben vorgenommen werden muß, deren Köpfe zudem auch noch von weitem sichtbar sind. Vor allen die Querstabilität derartiger "Gelenkwinkel" (z.B. gegen Winddruck) läßt zu wünschen übrig.

Der Erfindung liegt demgegenüber die Aufgabe zugrunde, einen Eckverbinder der eingangs beschriebenen Gattung anzugeben, mit dem Eckverbindungen nahezu beliebiger Winkelgrade herstellbar sind, die einer hohen Belastung in vertikaler und horizontaler Richtung standhalten.

Die Lösung der gestellten Aufgabe erfolgt bei dem eingangs angegebenen Eckverbinder erfindungsgemäß durch die im Kennzeichen des Anspruchs 1 angegebenen Merkmale.

Ein derartiger Eckverbinder läßt sich leicht aus Strangprofilen entsprechenden Querschnitts durch ebene Trennschnitte herstellen, die senkrecht zu einer Symmetrieebene verlaufen, in der auch die Querschnittsachse des Profils liegt, die aber gleichzeitig unter einem entsprechenden Winkel zur Profillängsachse verlaufen. Die Profilabschnitte haben eine solche gleiche Länge, daß die Abstände zwischen den durch die Trennschnitte erzeugten Endflächen (immer in Normalenrichtung zu den Endflächen gesehen) der lichten Höhe des Hohlprofils entsprechen, so daß die betreffenden Profilabschnitte, nachfolgend kurz "Abschnitte" genannt, gerade eben in den Hohlraum des zugehörigen Hohlprofils einschiebbar sind. Es hängt dann nur von dem weiter oben beschriebenen Winkel für die Ausführung des Trennschnitts ab, welcher Gehrungswinkel zwischen den in der Gehrungsfuge aneinanderstossenden Hohlprofilen herstellbar ist. Die geometrischen Überlegungen für die Wahl des Winkels, unter dem die einzelnen Trennschnitte auszuführen sind, werden in der Detailbeschreibung näher erläutert.

Es ist dann zur Herstellung des Eckverbinders lediglich erforderlich, in die Nut eines ersten Abschnitts die Feder eines "auf Umschlag gelegten" zweiten Abschnitts einzuschieben, so daß eine Feder-Nut-Verbindung entsteht, die auch als "Schwalbenschwanzführung" bezeichnet werden kann. Lediglich ein kleines Teilstück der Feder des ersten Abschnitts, das aus der Endfläche des zweiten Abschnitts auf einer Seite herausragt, muß noch abgetrennt werden.

Es ist also lediglich erforderlich, ein Leichtmetall-Strangprofil mit dem erforderlichen Profilquerschnitt nach Festlegung eines vorgegebenen Trennwinkels in Abschnitte gleicher Länge zu unterteilen, um durch einfaches Zusammenschieben jeweils zweier, relativ zueinander "auf Umschlag gelegter" Abschnitte einen Eckverbinder herzustellen, der den erforderlichen Gehrungswinkel aufweist. Da ein solcher Eckwinkel auch bereits die exakte Lage der späteren Gehrungsfuge zwischen den Hohlprofilen festlegt (worauf weiter unten noch näher hingewiesen wird), werden für die relative Festlegung der beiden Abschnitte zueinander auch keine umständlichen Befestigungsmittel benötigt, da die Feder-Nut-Verbindung durch das übergeschobene Hohlprofil in axialer Richtung untrennbar, d.h. formschlüssig festgelegt wird. Eine zusätzliche Befestigung durch Stifte oder Schrauben oder durch Verkleben hat alsdann im Prinzip nur noch die Funktion einer Montagehilfe.

Dabei sind die aneinanderstossenden Hohlräume der beiden Hohlprofile vom Querschnitt her stets voll ausgefüllt, d.h. insbesondere im Bereich der Gehrungsfuge wird eine gute Profilführung und damit ein absolut geschlossener Spalt erreicht. Damit wird die Verbindung auch gegenüber Querkräften (durch Winddruck) stabiler.

Der Erfindungsgegenstand ermöglicht die Verbindung von Hohlprofilen mit nahezu beliebigen Höhenabmessungen, ohne daß es hierzu besonderer Verbindungselemente bedürfte. Bei der Verbindung von Hohlprofilen mit besonders großen Höhenabmessungen kann es zweckmäßig sein, an jedem Ende der bereits zu einem Eckverbinder zusammengesetzten Abschnitte noch ein oder mehrere identische Abschnitte geradlinig anzusetzen, so daß die durch die Trennschnitte erzeugten Endflächen der Profile innerhalb der gleichen Schenkel miteinander fluchten. Dies ist deswegen möglich, weil sich an den Enden der beiden Schenkel stets am Ende des einen Schenkels eine Feder und am Ende des anderen Schenkels eine Nut befindet. Auch diese zusätzlichen Feder-Nut-Verbindungen können nicht "aufgehen", da sie innerhalb des mit geringen Toleranzen aufgeschobenen Hohlprofils liegen, mit dem sie zusätzlich verklebt und/oder verschraubt werden.

Unter dem Ausdruck "Hohlprofile" werden neben allseitig geschlossenen kastenförmigen Profilen auch solche verstanden, die einseitig offen sind (C-Profile) und Kastenprofile, die auf einer oder mehreren Seiten noch zusätzliche Profilvorsprünge aufweisen, beispielsweise solche, in die Fenster und andere Fassadenelemente eingesetzt werden können. Derartige Profile sind beispielhaft in dem Buch "Bauen mit Aluminium", 1983, Seiten 110 und 111, beschrieben.

Es ist dabei besonders vorteilhaft, wenn Nut und Feder auf dem größten Teil ihres Umfangs von Zylinderflächen begrenzt sind. Auf diese Weise läßt sich eine sehr hohe Passgenauigkeit erzielen. Dabei ist vorzugsweise die Feder, ausgehend von ihrer Zylinder fläche, über einen Steg mit trapezförmigem Querschnitt mit dem übrigen Teil des Profils verbunden. Die auf der gegenüberliegenden Seite angeordnete Nut hat alsdann eine komplementäre Form.

Auf die vorstehend angegebene Weise wird eine hohe Gestaltfestigkeit der Feder-Nut-Verbindung gegen Querkräfte erzielt, da diese Kräfte an den Stoßflächen aufgefangen werden, die in Bezug auf die gemeinsame Achse der Feder-Nut-Verbindung gewissermassen Hebelarme darstellen.

Schließlich ist es von Vorteil, wenn das Profil entlang der Querschnittsachse A-A und spiegelsymmetrisch zu dieser eine Mindeswandstärke von 10 mm aufweist. Hierdurch wird ein Steg entsprechender Wandstärke gebildet, der zum Einbringen von Bohrungen und Gewinden für Befestigungsschrauben in beliebigen Abständen dient. Wegen der unter einem von 90 Grad abweichenden Winkel zur Profillängsachse verlaufenden Endflächen der einzelnen Profilabschnitte und der Notwendigkeit, die Schrauben in Normalenrichtung zu den schrägen Enflächen einzubringen, verlaufen die Schraubenachsen in aller Regel nicht parallel zur Profillängsachse. Infolgedessen können für diese Arte der Befestigung keine vorgefertigten Schraubenkanäle vorgesehen werden. Die angegebene Mindestwandstärke schafft aber die erforderliche Gestaltungsfreiheit. Insbesondere können dadurch die Schrauben bzw. die Schraubenköpfe an eine Stelle verlegt werden, die bei einer Seitenansicht des Profilrahmens nicht sichtbar ist.

Eine besonders vorteilhafte Ausführungsform des Erfindungsgegenstandes ist dadurch gekennzeichnet, daß Feder und Nut durch einen die Mindestwandstärke aufweisenden Steg miteinander verbunden sind, von dem im Bereich der Feder und der Nut paarweise Flansche ausgehen, deren der Feder zugewandte bzw. in die Nut einmündende Oberflächenteile die weiter oben beschriebenen Stoßflächen für die Anlage eines jeweils weiteren Profilabschnitts darstellen. Die Flanschen stellen dabei die Hebelarme für die weiter oben beschriebene Abstützung dar, und die Stoßflächen verlaufen bevorzugt senkrecht zur Querschnittsachse A-A.

Die von der Querschnittsachse A-A jeweils nach außen weisenden Oberflächenteile der Flansche haben dabei ganz besonders zweckmäßigerweise einen Abstand B, der dem lichten Maß der Breite des im Profil vorhandenen Hohlraums entspricht. Auf diese Weise füllen die Flansche wenigstens stellenweise den gesamten Innenquerschnitt der Hohlräume der zu verbindenden Hohlprofile aus, und zwar insbesondere in unmittelbarer Nähe der Gehrungsfuge, so daß eine ausgezeichnete Führung der Hohlprofile in der Gehrungsfuge gewährleistet ist.

Es ist dabei weiterhin ganz besonders zweckmäßig, wenn zwischen den Flanschen in der Mitte des Steges Distanzrippen angeordnet sind, und wenn die jeweils von der Querschnittsachse A-A nach außen weisenden Oberflächenteile der Flansche und der Distanzrippen auf jeder Seite des Steges in je einer gemeinsamen Ebene $E_1$ bzw. $E_2$ enden, die parallel zur Querschnittsachse A-A verlaufen.

Auf die vorstehend angegebene Weise lassen sich die Schenkel des Eckverbinders großflächig mit den langen Seitenwänden der Hohlprofile verkleben. Die Klebeverbindung wird dadurch weiter begünstigt, wenn die nach außen weisenden, in den Ebenen $E_1$ und $E_2$ liegenden Oberflächen der Flanschen und der Distanzrippen mit einer Mikroprofilierung versehen sind. Bei dieser Mikroprofilierung handelt es sich um dreieckförmige Rippen, die durch ebensolche Nuten voneinander getrennt sind, wobei die Tiefe der Riffelung zwischen 0,2 und 0,4 mm liegen kann und der Flankenwinkel 90 Grad beträgt.

Der vorstehend beschriebene Eckverbinder ermöglicht die Herstellung von Eckverbindungen, bei denen Hohlprofile unter den unterschiedlichsten Winkeln zwischen 90 Grad und fast 180 Grad zueinander ausgerichtet sein können. Dies wird dadurch ermöglicht, daß die beiden, durch einen Trennschnitt erzeugten ebenen Endflächen eines jeden Profilabschnitts unter einem Winkel $\beta$ von fast 9 0 Grad bis 45 Grad zur Profillängsachse verlaufen. Bevorzugt eignet sich der Erfindungsgegenstand jedoch zur Herstellung von Eckverbindungen, bei denen die Hohlprofile Winkel zwischen 100 Grad und 160 Grad einschliessen. Dies wird dadurch ermöglicht, daß die Endflächen der Profilabschnitte unter einem Winkel $\beta$ von 80 bis 50 Grad zur Profillängsachse verlaufen.

Weitere vorteilhafte Ausgestaltungen und Verwendungen des Erfindungsgegenstandes werden einschließlich der damit verbundenen Vorteile in der nachfolgenden Detailbeschreibung näher erläutert.

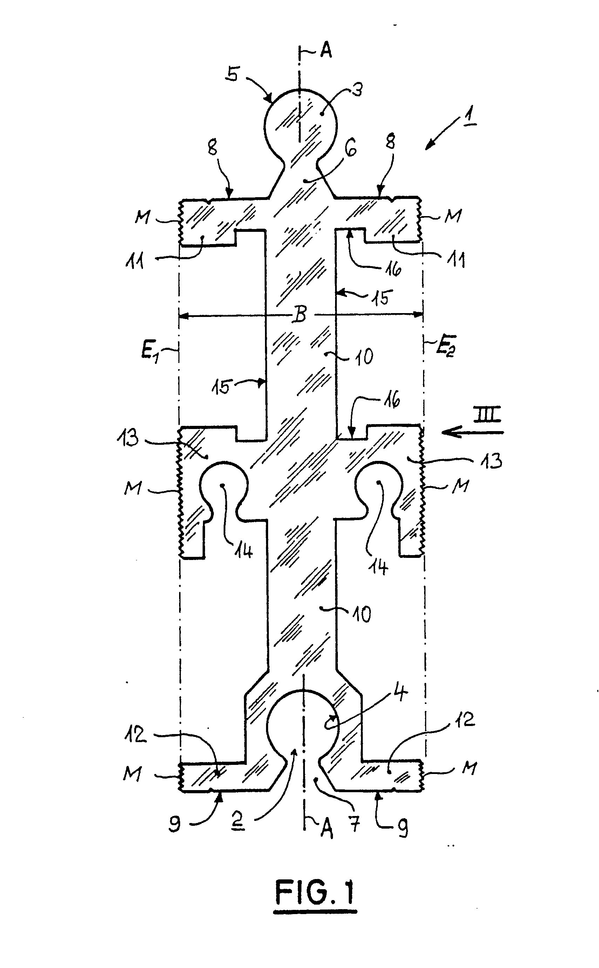

Ein Ausführungsbeispiel des Erfindungsgegenstandes wird nachfolgend anhand der Figuren 1 bis 10 näher erläutert.

Es zeigen:

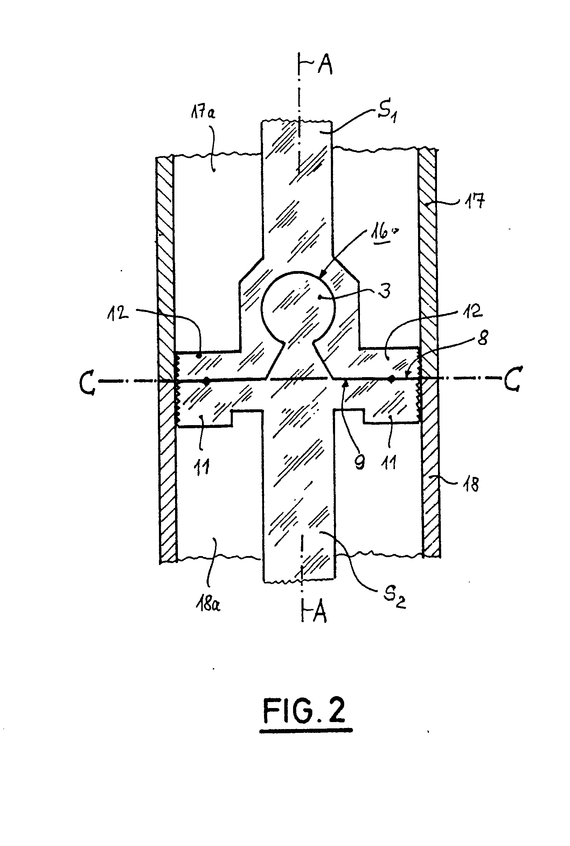

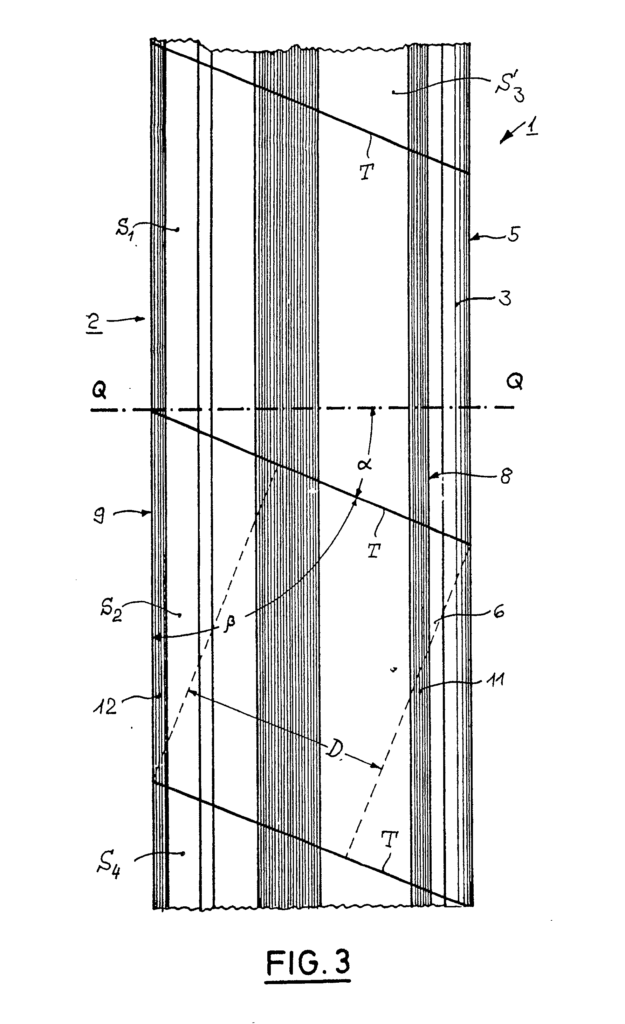

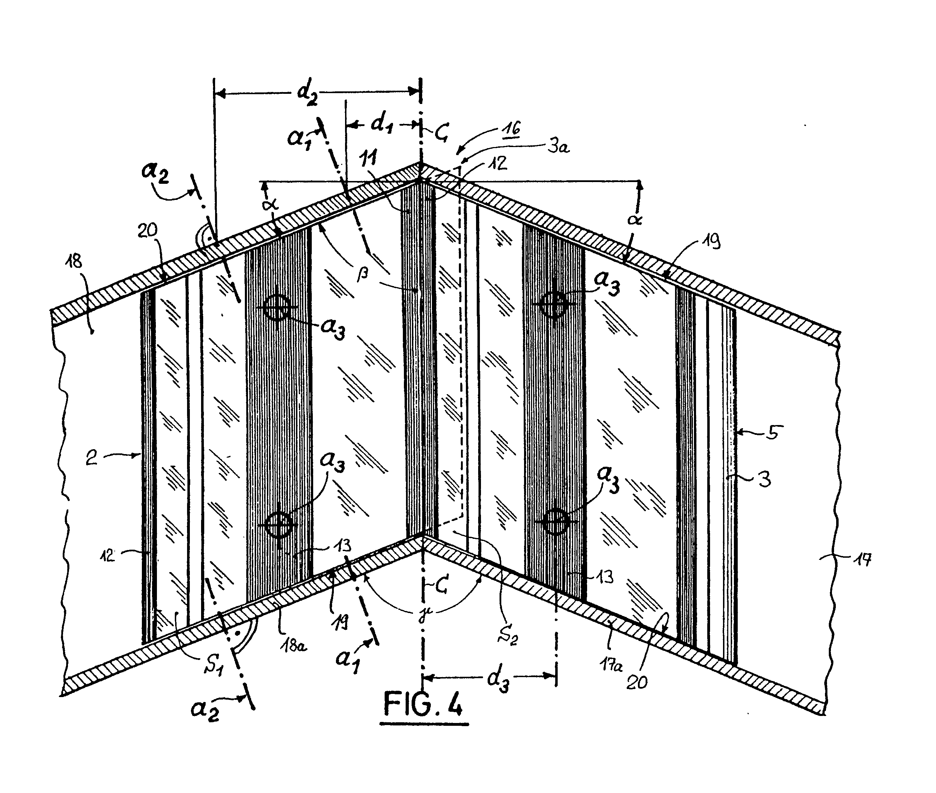

Figur 1
einen Querschnitt durch ein Leichtmetall-Strangprofil für die Herstellung eines Eckverbinders,
Figur 2
einen teilweisen Querschnitt durch eine Verbindungsstelle zweier Profile nach Figur 1,
Figur 3
eine Seitenansicht des Profils nach Figur 1 in Richtung des Pfeils III,
Figur 4
einen Eckverbinder, hergestellt unter Verwendung zweier Abschnitte $S_1$ und $S_2$ aus Figur 3,
Figuren 5 bis 9
Anwendungsbeispiele von Eckverbindern nach Figur 4 mit unterschiedlichen Eckwinkeln, und
Figur 10
einen teilweisen Querschnitt durch ein anderes Ausführungsbeispiel einer Verbindungsstelle zweier Profile in einer analogen Darstellung wie in Figur 2.

In Figur 1 ist ein Leichtmetall-Strangprofil 1 dargestellt, das eine lange Querschnittsachse A-A besitzt und zu dieser spiegelsymmetrisch ausgebildet ist. Die Profillängsachse verläuft senkrecht zur Zeichenebene, so daß durch die Querschnittsachse A-A und die Profillängsachse eine Symmetrieebene definiert wird, die gleichfalls senkrecht zur Zeichenebene verläuft. An den parallel zur Profillängsachse verlaufenden, in Richtung der Querschnittsachse A-A gegenüberliegenden Schmalseiten befindet sich auf der einen Seite eine hinterschnittene Nut 2 und auf der anderen Seite eine Feder 3, die in eine Nut gleicher Abmessungen wie die Nut 2 einführbar ist. Die Nut 2 und die Feder 3 sind auf dem größten Teil ihres Umfangs von Zylinderflächen 4 und 5 begrenzt. Die Feder 3 ist, ausgehend von ihrer Zylinderflächen 5, über einen Steg 6 mit trapezförmigem Querschnitt mit dem übrigen Teil des Profils verbunden. Feder und Nut sind komplementär zueinander ausgebildet, und dem trapezförmigen Steg 6 entspricht eine gleichfalls im Querschnitt trapezförmige Öffnung 7 der Nut 2. Es versteht sich, daß alle Übergänge gut abgerundet sind.

In Bezug auf die Querschnittsachse A-A befinden sich beiderseits der Feder 3 Stoßflächen 8 und beiderseits der Nut 2 Stoßflächen 9, auf die im Zusammenhang mit Figur 2 noch näher eingegangen wird.

Es wäre theoretisch möglich, den gesamten, zwischen den Stoßflächen 8 und 9 liegenden Raum mit der betreffenden Leichtmetall-Legierung auszufüllen. Aus Gewichtsgründen und zur Materialersparnis sind Feder und Nut jedoch nur durch einen Steg 10 verbunden, der aus den weiter oben angegebenen Gründen eine Mindestwandstärke von 10 mm aufweist. Im Bereich der Feder 3 ist ein Paar von Flanschen 11 angeordnet, während im Bereich der Nut 2 ein Paar von Flanschen 12 vorgesehen ist. Die der Feder 3 zugewandten Oberflächenteile der Flanschen 11 bilden die Stoßflächen 8, während die in die Nut 2 einmündenden Oberflächenteile der Stoßflächen 9 durchdie Flanschen 12 gebildet werden. Es ist zu erkennen, daß die Stoßflächen 8 und 9 jeweils senkrecht zur Querschnittsachse A-A verlaufen.

Weiterhin ist in der Mitte des Steges 10, d.h. zwischen den Flanschen 11 und 12, in spiegelsymmetrischer Anordnung ein Paar von Distanzrippen 13 vorgesehen. Die jeweils von der Querschnittsachse A-A nach außen weisenden Oberflächenteile der Flanschen 11 und 12 und der Distanzrippen 13 liegen auf jeder Seite des Steges 10 in je einer gemeinsamen Ebene $E_1$ bzw. $E_2$, die parallel zur Querschnittsachse A-A verlaufen, so daß die Stoßflächen 8 und 9 sowie die Ebenen $E_1$ und $E_2$ ein Rechteck umreissen, dessen immaterielle Teile strichpunktiert dargestellt sind. Dieses Rechteck hat die Breite "B", die der lichten Innenbreite der zu verbindenden Hohlprofile entspricht. Die nach außen weisenden, in den Ebenen $E_1$ und $E_2$ liegenden Oberflächenteile der Flanschen 11 und 12 und der Distanzrippen 13 sind mit einer Mikroprofilierung "M" versehen, durch die die Verklebung mit dem jeweils aufgeschobenen Hohlprofilen verbessert wird.

Wie aus Figur 1 weiterhin ersichtlich ist, sind in den Distanzrippen 13 in symmetrischer Anordnung beiderseits der Querschnittsachse A-A Schraubkanäle 14 angeordnet, die allerdings nur dann zum Einsatz kommen können, wenn die Endflächen der einzelnen Profilabschnitte senkrecht zur Profillängsachse verlaufen, d.h., wenn die Endflächen mit dem Profilquerschnitt identisch sind. In diesem Falle läßt sich aus zwei Profilen gemäß Figur 1 ein Stoß-Verbindungsstück für die geradlinige Verbindung von zwei Hohlprofilen herstellen, wobei die schmalen Wände des Hohlprofils senkrecht zu den Achsen der Schraubkanäle 14 verlaufen. In diesem Fall läßt sich durch eine Schablone das Hohlprofil exakt über den Schraubkanälen 14 anbohren, so daß auf die angegebene Weise eine zuverlässige Schraubverbindung zwischen den Profilabschnitten und den Hohlprofilen herstellbar ist. Die Stoßstelle der Hohlprofile liegt dann exakt in der Ebene der Stoßflächen 8 bzw. 9.

Zwischen den Flanschen 11 und den Distanzrippen 13 befinden sich weitere Längsnuten, deren Nutengründe 15 durch den Steg 10 gebildet werden. An beiden Enden eines jeden Nutengrundes 15 befindet sich je eine Hinterschneidung 16, in die ein weiteres, hier nicht gezeigtes, Befestigungselement eingeschoben werden kann, das einen komplementären, T-förmigen Querschnitt besitzt.

Figur 2 zeigt eine Verbindungsstelle zweier Profilabschnitte $S_1$ und $S_2$, die eine Feder-Nut-Verbindung 16 bilden. Die Achse der Feder 3 verläuft dabei ebenso senkrecht zur Zeichenebene wie die Flanschen 11 und 12 bzw. die zwischen Ihnen vorhandenen Stoßflächen 8 und 9 (Figur 1). Man kann sich die Achse der Feder-Nut-Verbindung 16 als eine Gelenkachse vorstellen, und es ist erkennbar, daß die Flanschen 11 und 12 der Verbindung ihre Festigkeit verleihen, wenn man sich beispielsweise ein auf die Verbindung 16 einwirkendes Drehmoment um die "Gelenkachse" vorstellt. Auf jeden der beiden Abschnitte $S_1$ und $S_2$ ist ein Hohlprofil 17 bzw. 18 aufgeschoben, deren vertikale Wandflächen im Schnitt und schraffiert dargestellt sind, während die horizontal oder geneigt verlaufenden (schmaleren) Wandflächen 17a bzw. 18a in der Draufsicht gezeigt sind. Die Stoß- bzw. Gehrungsfuge C-C, in der die beiden Hohlprofile 17 und 18 aneinanderstossen, verläuft gleichfalls senkrecht zur Zeichenebene, so daß die betreffende Fuge in der gleichen Ebene liegt wie die Stoßflächen 8 und 9 (Figur 1).

Es ist insbesondere Figur 2 zu entnehmen, daß die Flanschen 11 und 12 den Querschnitt der Hohlprofile 17 und 18 vollständig ausfüllen. Dadurch werden nicht nur die genannten Hohlprofile im Bereich der Gehrungsfuge zuverlässig geführt und exakt aufeinander ausgerichtet, sondern das Hohlprofil 17 verhindert gemäß Figur 2 auch eine Aufweitung des äußeren Teils (Nut 2) der Feder-Nut-Verbindung 16 durch sehr große Kräfte. Es ist weiterhin zu erkennen, daß die Feder 3 des Abschnitts $S_2$ in den Hohlraum des Hohlprofils 17 hineinragt, so daß sie auf diese Weise durch das Hohlprofil 17 an einem Herausschieben aus der Nut zuverlässig gehindert wird.

In der Draufsicht auf die Verbindungsstelle in Figur 2 existiert im Bereich der Linie C-C eine Art "Dachfirst", d.h. die beiden oberen Endflächen der Abschnitte $S_1$ und $S_2$ haben in Bezug auf die Gehrungsfuge C-C ein spiegelsymmetrisches Gefälle (siehe auch Figur 4).

Figur 3 zeigt (unter Verwendung bisheriger Bezugszeichen) eine Draufsicht auf das Profil 1 in Richtung des Pfeils III in Figur 1. Hierbei verläuft die Symmetrieebene des Profils (Querschnittsachse A-A) parallel zur Zeichenebene. In dieser Lage wird das Profil auf einer Unterlage gehalten, wenn es in einzelne Abschnitte $S_1$ bis $S_4$ zerlegt wird.

Die parallelen Trennschnitte bzw. Endflächen der einzelnen Abschnitte verlaufen infolgedessen stets senkrecht zu der genannten Symmetrieebene, aber gleichzeitig unter einem Winkel "$\beta$" zur Profillängsachse. Der Komplementärwinkel zum Profilquerschnitt Q-Q ist infolgedessen "$\alpha$". Auf diese Weise entstehen in der Draufsicht Profilabschnitte mit rhombusförmigen Umrißlinien, deren Höhe (gemessen in Richtung der gestrichelten Linien) dem inneren lichten Höhenmaß des aufzuschiebenden Hohlprofils entspricht. Der Winkel "β" ist je nach dem geforderten Gehrungswinkel zwischen 90 Grad und 45 Grad (gegebenenfalls auch darunter) frei wählbar. Es ist allerdings darauf zu achten, daß das Maß D für die Überlappung der Endflächen der Abschnitte (gemessen zwischen den gestrichelten Linien) ausreichend groß ist. Bei großer Höhe des Hohlprofils und/oder spitzem Gehrungswinkel wird die Überlappung D zunehmend kleiner. In diesem Fall können, wie bereits weiter oben ausgeführt wurde, zwei (oder mehrere) Abschnitte unter Verwendung ihrer Feder-Nut-Verbindungen 16 **geradlinig** aneinander gereiht werden, wodurch sich das Maß D der Überlappung entsprechend vervielfacht.

Figur 4 zeigt nun, in welcher Weise die beiden Abschnitte $S_1$ und $S_2$ aus Figur 3 nach Herumlegen des Abschnitts $S_1$ "auf Umschlag" miteinander zu vereinigen sind, um einen Eckwinkel zu erhalten. Die Federn 3 sind dabei jeweils nach rechts gerichtet, die Nuten 2 nach links. Es ist anhand der gestrichelten Linien erkennbar, daß zunächst die Feder 3 des linken Abschnitts $S_1$ um ein kurzes Stück 3a aus der oberen Endfläche 19 des Abschnitts $S_2$ herausragt. Dieses Stück wird alsdann einfach abgetrennt. Nach dem Verbinden der Abschnitte $S_1$ und $S_2$ werden diese relativ zueinander festgelegt, was durch Verkleben, eine Schraub- oder Quetschverbindung erfolgen kann. Es ist zu erkennen, daß sich in dem gemäß Figur 4 zusammengesetzten Zustand der beiden Abschnitte $S_1$ und $S_2$ die Endflächen 19 bzw. 20 der beiden Abschnitte paarweise in derjenigen Ebene schneiden, in der die sich berührenden Stoßflächen 8 und 9 der beiden Abschnitte liegen (siehe hierzu auch Figur 2, Linie C-C). Die Endflächen 19 und 20 bilden hierbei eine Art Dachfläche mit einer Firstlinie an der Stelle der sich berührenden Stoßflächen. Der dazwischen eingeschlossene Winkel "γ" ist der sogenannte Gehrungswinkel, und zwar ist $\gamma = 2 \times \beta$, und insgesamt gilt $2 \times \alpha + \gamma = 180$ Grad. Daraus ergibt sich auch, daß die jeweils zusammengehörigen Endflächen 19 und 20 der beiden Abschnitte $S_1$ und $S_2$ bei einer von 90 Grad abweichenden Lage dieser Endflächen zur Profillängsachse in Ebenen liegen, die spiegelsymmetrisch zu derjenigen Ebene verlaufen, in der sich die Stoßflächen 8 und 9 der Abschnitte $S_1$ und $S_2$ berühren.

Auf einen solchermaßen hergestellten Eckwinkel lassen sich dann die Hohlprofile 17 und 18 einfach aufschieben und in der weiter oben angegebenen Weise mit dem Eckwinkel verbinden.

Befestigungsbeispiele mit Schraubverbindungen sind in Fig. 4 gleichfalls gezeigt: Die stets senkrecht zur zugehörigen Oberfläche ausgerichteten Schraubenachsen $a_1$, $a_2$ und $a_3$ haben die Abstände $d_1$, $d_2$ und $d_3$ von der Gehrungsfuge (Linie C-C). Diese Abstände sind stets gleich, und zwar unabhängig von den Winkeln $\gamma\alpha$, $\beta$ und $\gamma$. Dies ist wichtig im Hinblick auf die Vorratshaltung von Bohrschablonen.

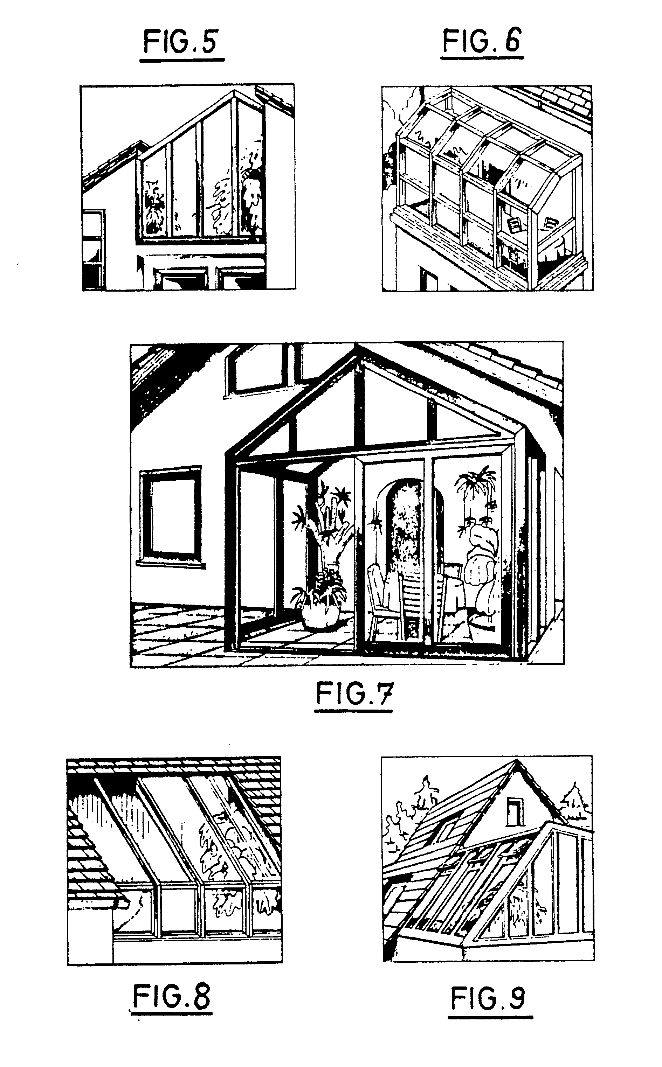

Die Figuren 5 bis 9 zeigen einige Anwendungsbeispiele für Eckwinkel aus dem erfindungsgemäßen Leichtmetall-Strangprofil. So zeigt Figur 5 einen Ausschnitt in der Giebelwand eines Hauses. In dem Ausschnitt befindet sich eine Rahmenkonstruktion mit Verglasung, hinter der sich ein Dachgarten befindet. Diese Rahmenkonstruktion zeigt im oberen Bereich zwei Gehrungsecken, die mit derartigen Eckverbindern ausgerüstet sind, Figur 6 zeigt eine Glasveranda mit einer Vielzahl von wiederkehrenden, auf Gehrung geschnittenen Rahmenteilen. In jeder der Gehrungsecken befindet sich ein erfindungsgemäß hergestellter Eckwinkel. Derartige Glasveranden können bei geeigneter Gestaltung auch als "Solaranbauten" bezeichnet werden.

Figur 7 zeigt einen Vorbau aus einer verglasten Rahmenkonstruktion, die an ihren mehrfach vorhandenen Gehrungsecken gleichfalls Eckwinkel der erfindungsgemäßen Art besitzt. Figur 8 zeigt einen Dachausschnitt mit einer verglasten Rahmenkonstruktion nach Art eines Atelierfensters. Auch hier werden an den nach vorn weisenden Gehrungsecken erfindungsgemäße Profile verwendet. Figur 9 zeigt ein angebautes Gewächshaus, in dessen tragenden Rahmenprofilen an den Gehrungsecken gleichfalls erfindungsgemäße Leichtmetall-Strangprofilabschnitte vorgesehen sind. Mit den dargestellten Ausführungsbeispielen ist jedoch die Anwendungsbreite des Erfindungsgegenstandes bei weitem nicht erschöpft.

Es ist natürlich auch möglich, die Anzahl der komplementären Federn und Nuten an beiden Schmalseiten des Profilquerschnitts zu vervielfachen, um die Gestaltfestigkeit noch weiter zu erhöhen.

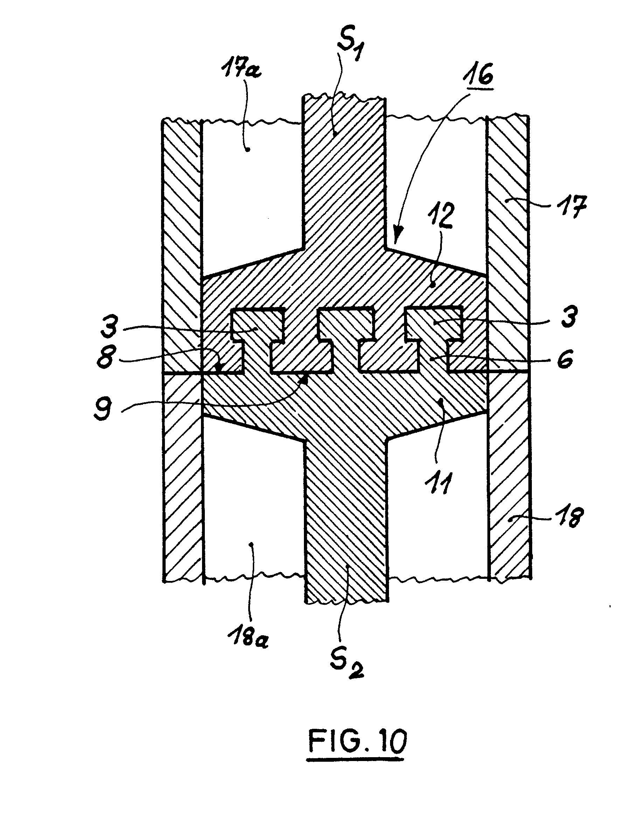

Bei der Variante der Feder-Nut-Verbindung 16 nach Fig. 10 haben die Federn 3 und die Nuten komplementäre T-förmige Querschnitte und eine entsprechende räumliche Lage. Außerdem sind Federn und Nuten jeweils mehrfach (dreifach) angeordnet. Soweit die Bezugzeichen gleiche Teile oder Teile mit gleicher Funktion betreffen, wurden sie beibehalten.

Die erfindungsgemäßen Eckverbinder lassen eine große Variationsbreite von Schraubbefestigungen gegenüber den Hohlprofilen zu: Die Verschraubungen können wahlweise oder gleichzeitig auf der Außen-und/oder Innenseite der Gehrungsecke und/oder auf den Flachseiten der Gehrungsecke erfolgen.

**Ansprüche**

1. Eckverbinder, bestehend aus mindestens zwei im Eckbereich über eine Nut- und Federverbindung zusammengesetzten Leichtmetall-Strangprofil-Abschnitten (S1,S2), die als Schenkel des Eckverbinders unter einem Winkel zueinander stehen und in Hohlprofile mit von einem Rechteck umschriebenen Hohlraum einschiebbar sind, dadurch gekennzeichnet, daß

a) die Leichtmetall-Strangprofilabschnitte aus einem Strangprofil des gleichen Querschnitts gebildet sind, das an einem Längsrand mindestens ein Nut (2) und am gegenüberliegenden Längsrand mindestens eine Feder (3) aufweist,

b) wobei das Strangprofil eine lange Querschnittsachse (A-A) und an den in Richtung dieser Querschnittsachse (A-A) gegenüberliegenden Längsrändern Stoßflächen (8, 9) besitzt, die parallel zur Profillängsachse verlaufen und zwischen denen auf der einen Seite des Profils die mindestens eine hinterschnittene Nut (2) und auf der anderen Seite die mindestens eine in die Nut (2) unter Berührung an den Stoßflächen (8, 9) formschlüssig einführbare Feder (3) angeordnet sind, daß

c) die Leichtmetall-Strangprofil-Abschnitte (S1, S2) zwei parallele, durch ebene Trennschnitte erzeugte Endflächen (19, 20) aufweisen, die unter einem von 90 Grad verschiedenen Winkel (ß) zur Profillängsachse verlaufen, und wobei mindestens zwei Leichtmetall-Strangprofil-Abschnitte (S1, S2) mit gleichem Winkel (ß) mittels der Nut (2) des einen und der Feder (3) des jeweils anderen Leichtmetall-StrangprofilAbschnitts derart ineinander eingesetzt sind, daß die Endflächen (19, 20) beider Leichtmetall-Strangprofil-Abschnitte (S1, S2) sich unter einem Winkel (2ß) schneiden.

2. Eckverbinder nach Anspruch 1, dadurch gekennzeichnet, daß die Endflächen (19, 20) durch ebene Trennschnitte unter einem Winkel (ß) von 80 bis 50 Grad zur Profillängsachse gebildet sind.

3. Eckverbinder nach Anspruch 1, dadurch gekennzeichnet, daß die Feder (3) eine Zylinderfläche (5) aufweist, ausgehend von welcher sie über einen Steg (6) mit trapezförmigem Querschnitt mit dem übrigen Teil des Leichtmetall-Strangprofil-Abschnitts (S1, S2) verbunden ist.

4. Eckverbinder nach Anspruch 1, dadurch gekennzeichnet, daß Feder und Nut durch einen 10 mm Mindestwandstärke aufweisenden, symmetrisch zur Querschnittsachse (A-A) angeordneten Steg (10) miteinander verbunden sind, von dem im Bereich der Feder (3) und der Nut (2) paarweise Flansche (11 und 12) ausgehen, deren der Feder (3) zugewandte bzw. in die Nut (2) einmündende Oberflächenteile die Stoßflächen (8, 9) für die Anlage des jeweils anderen Leichtmetall-Strangprofil-Abschnitts (S1 bzw. S2) darstellen.

5. Eckverbinder nach Anspruch 4, dadurch gekennzeichnet, daß zwischen den Flanschen (11, 12) etwa in der Mitte des Steges (10) Distanzrippen (13) angeordnet sind, und daß die jeweils von der Querschnittsachse (A-A) nach außen weisenden Oberflächenteile der Flanschen (11, 12) und der Distanzrippen (13) auf jeder Seite des Stegs (10) in je einer gemeinsamen Ebene, (E1, E2) enden, die parallel zur Querschnittsachse (A-A) verlaufen.

6. Eckverbinder nach Anspruch 5, dadurch gekennzeichnet, daß die nach außen weisenden, in den Ebenen (E1 bzw. E2) liegenden Oberflächenteile der jeweiligen Flanschen (11, 12) und der Distanzrippen (13) mit einer Mikroprofilierung (M) versehen sind.

**Claims**

1. Corner joining device, consisting of at least two alloy extrusion profile sections (S1, S2), assembled via groove- and spring joins in the corner region, which are positioned as legs of the corner join at an angle relative to one another and slideable into hollow-profile members with a hollow space defined by a rectangle, **characterised in that**

Đa) the alloy extrusion profile sections are composed of an extrusion profile of the same cross-section, with at least one groove (2) in one longitudinal edge, and at least one spring (3) in the opposite longitudinal edge;

b) whereby the extrusion profile has a long cross-sectional axis (A-A) and butt-joints (8, 9) at the longitudinal edges located opposite relative to the direction of said cross-sectional axis, which butt-joints extend parallel to the profile longitudinal axis, and between which is disposed a spring, on the one side of the profile insertable into at least a rearward cut groove (2) and on the other side at least into the groove (2) whilst abutting against the butt-joints (8, 9); that

c) the alloy extrusion profile sections (S1, S2) have two parallel end surfaces (19, 20) formed by plane separating cuts, which surfaces extend at an angle differing by 90° (ß) relative to the profile longitudinal axis, and whereby at least two alloy extrusion profile sections (S1, S2) are inserted at equal angle (ß) by way of the groove (2) of the one and the spring (3) of the respective other alloy extrusion profile section in such a manner that the end surfaces (19, 20) of both alloy extrusion profile sections (S1, S2) intersect one another at an angle (2ß).

2. Corner joining device according to claim 1, **characterised in that** the end surfaces (19, 20) are formed by plane separating cuts at an angle (ß) of 80 to 50 degrees relative to the profile longitudinal axis.

3. Corner joining device according to claim 1, **characterised in that** the spring (3) has a cylindrical surface (5), from where it is connected via a web (6) of trapezoidal crosssection to the remaining part of the alloy extrusion profile section (S1, S2).

4. Corner joining device according to claim 1, **characterised in that** spring and groove are connected to one another by a web (10) with a minimum wall thickness of 10 mm and arranged symmetrically relative to the cross-sectional axis (A-A), from where in the region of the spring (3) and the groove (2) extend flanges (11 and 12) in pairs, their surface parts facing the spring (3) or engaging the groove (2) respectively which constitute the butt-joints (8, 9) for the abutment of the respective other alloy extrusion profile section (S1 or S2 respectively).

5. Corner joining device according to claim 4, **characterised in that** spacer ribs (13) are arranged between the flanges (11, 12) approximately in the middle of the web (10), and that the surface sections of the flanges (11, 12) and the spacer ribs (13), which each face outward relative to the cross-sectional axis (A-A), extend on each side of the web (10) in each a common plane (E1, E2) which extend parallel to the cross-sectional axis (A-A).

6. Corner joining device according to claim 5, **characterised in that** the outward facing surface sections lying in the planes (E1 or E2 respectively) of the respective flanges (11, 12) and spacer ribs (13) are provided with a micro profile (M).

**Revendications**

1. Raccord d'angle constitué d'au moins deux tronçons (S1. S2) d'un profilé extrudé en alliage léger assemblés au niveau du coin, qui constituent les ailes du raccord d'angle formant entre elles un angle et qui peuvent s'enfiler dans des profilés creux présentant un vide inscrit dans un rectangle, caractérisé

a) en ce que les tronçons de profilé extrudé en alliage léger sont formés dans un profilé extrudé de même section présentant sur l'un de ses bords longitudinaux au moins une rainure (2) et sur le bord longitudinal opposé au moins une languette (3).

b) ce profilé extrudé possédant un axe transversal (A-A) et sur les bords longitudinaux opposés situés dans la direction de cet axe transversal (A-A) des surfaces d'aboutement (8, 9) qui sont parallèles à l'axe longitudinal du profilé et entre lesquelles sont disposées, sur l'un des côtés du profilé, la rainure (2) dépouillée existant en au moins un exemplaire et sur l'autre côté la languette (3) existant en au moins un exemplaire et pouvant s'insérer pour constituer une liaison par obstacle dans la rainure (2) avec contact entre les surfaces d'aboutement (8, 9),

c) en ce que les tronçons de profilé extrudé en alliage léger (S1, S2) présentent deux surfaces d'extrémité parallèles (18, 19) produites par des traits de coupe plans qui forment avec l'axe longitudinal du profilé un angle ß différent de 90 degrés, au moins deux tronçons de profilé extrudé en alliage léger (S1, S2) ayant un même angle (ß) étant assemblés à l'aide de la rainure (2) de l'un et de la languette (3) de l'autre tronçon de profilé extrudé en alliage léger de telle manière que les surfaces d'extrémité (19, 20) des deux tronçons de profilé extrudé en alliage léger (S1. S2) se coupent selon un angle (2ß).

2. Raccord d'angle selon la revendication 1, caractérise en ce que les surfaces d'extrémité (19, 20) sont formées par des traits de coupe plans formant un angle (ß) de 80 à 50 degrés par rapport à l'axe longitudinal du profilé.

3. Raccord d'angle selon la revendication 1, caractérisé en ce que la languette (3) présente une surface cylindrique (5) à partir de laquelle elle est reliée par une âme (6) de section trapézoïdale au reste du tronçon de profilé extrudé en alliage léger (S1, S2).

4. Raccord d'angle selon la revendication 1, caractérisé en ce que la rainure et la languette sont reliées par une âme (10) symétrique par rapport à l'axe transversal (A-A) et possédant une épaisseur minimale de paroi de 10 mm, à partir de laquelle partent au niveau de la languette (3) et de la rainure (2) des brides (11 et 12) appariées dont les surfaces tournées vers la languette (3) ou aboutissant à la rainure (2) constituent les surfaces d'aboutement (8, 9) contre lesquelles s'appuie l'autre tronçon de profilé extrudé en alliage léger (S1 ou S2).

5. Raccord d'angle selon la revendication 4, caractérisé en ce que, entre les brides (11, 12), approximativement au milieu de l'âme (10), sont disposées des entretoises (13) et en ce que les surfaces des brides (11, 12) et des entretoises (13) extérieures par rapport à l'axe transversal (A-A) se terminent de chaque côté de l'âme dans un plan commun (E1, E2) parallèle à l'axe transversal (A-A).

6. Raccord d'angle selon la revendication 5, caractérisé en ce que les surfaces des brides (11, 12) et des entretoises (13) tournées vers l'extérieur et situées dans les plans (E1 ou E2) portent un microprofilage (M).

FIG.1

FIG. 2

FIG. 3

FIG. 4

FIG.5

FIG.6

FIG.7

FIG.8

FIG.9

FIG. 10